# FASCICULE DE BREVET EUROPEEN

(11) **EP 3 419 936 B1**
(45) Date de publication et mention de la délivrance du brevet: **28.08.2019**
(21) Numéro de dépôt: 17706818.6
(22) Date de dépôt: 24.02.2017
(51) Int. Cl.: C02F 1/72, B65G 51/01, C02F 1/32, C02F 101/30, C02F 103/26, C02F 103/32

(54) **CONVOYEUR HYDRAULIQUE D'OBJETS FLOTTANTS ÉQUIPÉ D'UN DISPOSITIF D'ASSAINISSEMENT DE COMPOSITION DE CONVOYAGE, INSTALLATION ÉQUIPÉE D'UN TEL CONVOYEUR ET PROCÉDÉ D'ASSAINISSEMENT**
HYDRAULISCHER FÖRDERER VON SCHWIMMENDEN OBJEKTEN MIT EINER VORRICHTUNG ZUR DESINFEKTION EINER FÖRDERZUSAMMENSETZUNG, ANLAGE MIT SOLCH EINEM FÖRDERER UND DESINFEKTIONSVERFAHREN
HYDRAULIC CONVEYOR OF FLOATING OBJECTS EQUIPPED WITH A DEVICE FOR SANITIZING CONVEYING COMPOSITION, PLANT EQUIPPED WITH SUCH A CONVEYOR AND SANITIZING PROCESS

(30) Priorité: 26.02.2016 FR 1651638
(43) Date de publication de la demande: 02.01.2019
(73) Titulaire: MAF Agrobotic, 82000 Montauban (FR); Institut National Polytechnique de Toulouse, 31400 Toulouse (FR); Centre National de la Recherche Scientifique, 75016 Paris (FR); Université Toulouse III-Paul Sabatier, 31062 Toulouse (FR)
(72) Inventeur: DUESO, Bernard, 82700 Montech (FR); BLANC, Philippe, 82000 Montauban (FR); ANDRIANTSIFERANA, Caroline, 31450 Deyme (FR); AYRAL, Catherine, 31520 Ramonville-St-Agne (FR); BENOIT-MARQUIE, Florence, 31660 Buzet-sur-Tarn (FR); DESTRAC, Philippe, 31500 Toulouse (FR); JULCOUR, Carine, 31400 Toulouse (FR)
(74) Mandataire: Cabinet BARRE LAFORGUE & associés
(86) Numéro de dépôt international: PCT/EP2017/054378
(87) Numéro de publication internationale: WO 2017/144688

(56) Documents cités:
- EP-A1- 1 167 306
- WO-A1-2011/160186
- US-A1- 2016 016 830
- HUBERT FALLMANN ET AL: "Applicability of the Photo-Fenton method for treating water containing pesticides", CATALYSIS TODAY, vol. 54, no. 2-3, 1 décembre 1999 (1999-12-01), pages 309-319, XP055291710, NL ISSN: 0920-5861, DOI: 10.1016/S0920-5861(99)00192-3

## Description

L'invention concerne un convoyeur hydraulique d'objets flottants tels que des fruits ou des légumes, du type à recirculation de composition -notamment aqueuse- de convoyage, comprenant un dispositif d'assainissement de la composition de convoyage. L'invention concerne également une installation de tri -notamment une installation de tri et d'emballage- de tels objets flottants équipée d'au moins un tel convoyeur hydraulique et un procédé d'assainissement d'une telle composition de convoyage.

Dans tout le texte :
- l'expression « objets flottants » désigne des objets présentant une flottaison suffisante dans un courant de liquide pour pouvoir être transportés par ce dernier. Cette terminologie couvre non seulement les objets flottants en surface du courant de liquide, mais également les objets immergés dans le liquide, mais dont la densité est suffisamment faible pour permettre leur transport dans le courant de liquide, notamment immergés entre deux eaux ;
- les termes « amont » et « aval » sont définis par rapport au sens d'écoulement d'une composition de convoyage convoyant des objets flottants tels que des fruits ou des légumes ;
- le terme « dépollution » ou « assainissement » désigne l'élimination totale ou partielle de composés indésirables -notamment de composés toxiques pour l'homme- présents dans une composition de convoyage d'un convoyeur hydraulique du type à recirculation de composition de convoyage, d'une installation de tri (et d'emballage) d'objets flottants tels que des fruits ou des légumes ;
- le terme « recirculation » désigne de façon commune le mouvement d'un fluide en circuit fermé, et ;
- le terme « lumineux » et ses dérivés désigne tout rayonnement électromagnétique de longueur d'onde comprise entre 100 nm et 1mm, et couvre donc les ultraviolets, le domaine visible et les infrarouges ;
- l'expression "au moins sensiblement" indique, de façon habituelle, qu'une caractéristique, structurelle ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré.

Après récolte, des fruits et/ou des légumes, tels que par exemple des pommes, peuvent être convoyés par flottaison dans une installation de tri de ces fruits et/ou de ces légumes dans laquelle ils sont triés en fonction de critères tels que leur taille et/ou de leur forme et/ou de leur couleur et/ou de leur poids et/ou de leur qualité -interne ou externe- et groupés en lots de fruits et/ou de légumes présentant des caractéristiques semblables.

On connaît dans l'art un convoyeur hydraulique d'objets flottants choisis dans le groupe formé des fruits et des légumes ledit convoyeur hydraulique étant équipé d'un dispositif d'assainissement de la composition de convoyage par filtration sur du charbon actif.

On connait de FR 2 956 595 une unité de tri automatique de fruits et légumes en fonction de critères de sélection prédéterminés permettant de grouper des produits en lots en vue de leur emballage. Dans une telle unité de tri et d'emballage, les fruits et légumes sont convoyés par flottaison dans des canaux hydrauliques de sorte que les fruits et légumes sont en contact avec de l'eau circulant dans des canaux hydrauliques.

Lors de ces opérations de convoyage, de tri et de préparation de lots prêts à être emballés, au moins une partie des pesticides -par exemple des fongicides et/ou des insecticides- présents en surface de ces fruits et/ou de ces légumes est susceptible d'être solubilisée dans l'eau des canaux hydrauliques. Dans le cas du tri et de l'emballage de pommes, on identifie par exemple des pesticides tels que le boscalide, le fludioxonil, le thiaclopride et la pyraclostrobine dans l'eau des canaux hydrauliques.

En outre, lors de ces opérations de convoyage, de tri et de préparation de lots prêts à être emballés, des micro-organismes, et/ou des mycotoxines produites par des champignons et/ou des moisissures de surface des fruits et/ou des légumes, sont aussi susceptibles de polluer l'eau des canaux hydrauliques.

Dans une installation de tri comprenant un convoyeur hydraulique du type à recirculation de la composition aqueuse de canaux hydrauliques, cette composition aqueuse est mise en contact avec tous les fruits et/ou légumes convoyés. Il en résulte que la concentration en pesticide, et/ou en micro-organismes et/ou en mycotoxines dans la composition aqueuse augmente au fur et à mesure de l'apport de nouveaux fruits dans le convoyeur hydraulique. Un assainissement de la composition aqueuse des canaux hydrauliques est donc souhaité pour conditionner des fruits présentant des teneurs en pesticides satisfaisant aux normes alimentaires.

Il existe donc un besoin de fournir une solution permettant d'éliminer (totalement ou partiellement) de tels pesticides, micro-organismes et/ou mycotoxines de la composition aqueuse des canaux hydrauliques et pour permettre l'emballage d'objets flottants sains et propres à la consommation humaine.

Dans la majorité des cas, il est prévu un organe de filtration en continu de la composition aqueuse de convoyage circulant dans les canaux hydrauliques. Cette filtration peut être assurée par un filtre comprenant du charbon actif permettant une filtration de particules en suspension dans l'eau ainsi qu'un piégeage par adsorption de certains composés organiques. Cependant, la filtration de l'eau de canaux hydrauliques sur un filtre à charbon actif pose de nombreux problèmes.

D'une part, le charbon actif présente une capacité limitée d'adsorption de composés chimiques organiques de sorte qu'au-delà d'une quantité de composés organiques adsorbés, le charbon actif est saturé et le filtre devient inefficace. En outre, cette perte d'efficacité de la filtration ne peut pas être anticipée et nécessite la mise en oeuvre constante de tests d'analyse de la quantité de polluants en sortie de filtre. La perte d'efficacité de la filtration n'est donc détectée que tardivement et certains produits conditionnés sont susceptibles de ne pas satisfaire les normes règlementaires vis-à-vis de ces polluants.

D'autre part, en cas de saturation du charbon actif du filtre à charbon actif, la solution consiste en un remplacement du charbon actif dans le filtre à charbon actif qui impose l'arrêt de la filtration et le cas échéant l'arrêt complet de l'installation de traitement de fruits et/ou légumes, ce qui n'est pas souhaitable dans certaines applications pour lesquelles le dispositif doit de préférence pouvoir fonctionner en permanence.

Par ailleurs, une telle filtration en continu du débit du liquide circulant dans les canaux hydrauliques n'est en général que partielle, compte tenu du volume important de liquide alimentant les canaux hydrauliques Avec une telle filtration partielle, des impuretés présentes dans le débit de liquide se trouvent être recyclées dans les canaux hydrauliques qu'elles contribuent à salir à nouveau.

L'invention vise à pallier à l'ensemble de ces inconvénients. En particulier, l'invention vise à pallier à l'ensemble des inconvénients inhérents à l'utilisation de filtres à charbon actif dans un convoyeur hydraulique.

L'invention vise aussi à proposer un convoyeur hydraulique, une installation comprenant un tel convoyeur hydraulique et un procédé d'assainissement de composition aqueuse de convoyage d'un tel convoyeur hydraulique permettant de satisfaire aux dispositions règlementaires relatives aux quantités de pesticides associées à des fruits et légumes emballés destinés à la consommation humaine.

L'invention vise aussi à proposer un convoyeur hydraulique, une installation comprenant un tel convoyeur hydraulique et un procédé d'assainissement de composition aqueuse de convoyage d'un tel convoyeur hydraulique qui permettent de diminuer la quantité de pesticides tels que, par exemple, le boscalide, le fludioxonil, la pyraclostrobine ou le thiaclopride, de micro-organismes ou de mycotoxines telles que la patuline présents en surface de fruits et légumes emballés.

L'invention vise aussi à proposer un convoyeur hydraulique, une installation comprenant un tel convoyeur hydraulique et un procédé d'assainissement de composition aqueuse de convoyage d'un tel convoyeur hydraulique qui sont d'une grande efficacité, en particulier vis-à-vis de la dépollution d'une composition aqueuse de convoyage présentant un taux de boscalide élevé, par exemple de l'ordre de 200 µg par litre.

L'invention vise aussi à proposer un convoyeur hydraulique, une installation comprenant un tel convoyeur hydraulique et un procédé d'assainissement de composition aqueuse de convoyage d'un tel convoyeur hydraulique qui sont efficaces quelle que soit la valeur du titre hydrotimétrique de la composition aqueuse de convoyage, en particulier pour une valeur élevée du titre hydrotimétrique (c'est-à-dire pour une eau « dure »), par exemple pour une eau présentant un taux de bicarbonate de calcium de l'ordre de 350 mg/L.

L'invention vise aussi à proposer un convoyeur hydraulique, une installation comprenant un tel convoyeur hydraulique et un procédé d'assainissement de composition aqueuse de convoyage d'un tel convoyeur hydraulique qui permettent de diminuer la toxicité par induction de dommages non réparables à l'ADN (génotoxicité) -par exemple évaluée sur des amphibiens *Xenopus laevis-* d'une composition aqueuse de convoyage d'un convoyeur hydraulique du type à recirculation.

Pour ce faire, l'invention concerne un convoyeur hydraulique d'objets flottants choisis dans le groupe formé des fruits et des légumes, du type à recirculation d'une composition, dite composition de convoyage, liquide de convoyage des objets flottants, ledit convoyeur hydraulique étant équipé d'au moins un dispositif d'assainissement de ladite composition de convoyage ;
caractérisé en ce qu'au moins un dispositif d'assainissement comprend :
- au moins un dispositif d'irradiation disposé pour pouvoir irradier une composition, dite composition à assainir, formée par mélange d'au moins une partie de ladite composition de convoyage et d'une quantité d'une composition, dite composition photo-réactive, comprenant au moins un composé photosensible choisi pour pouvoir former, sous l'effet d'une irradiation par au moins un dispositif d'irradiation, au moins un composé, dit composé actif, apte à pouvoir transformer par réaction chimique au moins un composé polluant de ladite composition de convoyage en composé non polluant, et ;
- au moins deux enceintes de photolyse montées en séries de sorte que ladite composition à assainir puisse s'écouler successivement dans lesdites au moins deux enceintes de photolyse, au moins un dispositif d'irradiation étant disposé dans un volume intérieur de chaque enceinte de photolyse.

Les inventeurs ont en particulier observé :
- qu'il est possible d'assainir une composition de convoyage d'un convoyeur hydraulique d'objets flottants choisis dans le groupe formé des fruits et des légumes, le convoyeur hydraulique étant du type à recirculation de composition de convoyage, en mélangeant ladite composition de convoyage avec une composition photo-réactive et en soumettant le mélange à une irradiation dans un dispositif d'assainissement comprenant une pluralité d'enceintes de photolyse, chaque enceinte de photolyse comprenant un dispositif d'irradiation, et dans des conditions adaptées pour pouvoir former dans ce mélange et sous l'effet de l'irradiation, au moins une espèce chimique réactive avec au moins un polluant de ladite composition de convoyage ;
- qu'il est possible de former dans ce mélange une quantité d'au moins une espèce chimique réactive, cette quantité étant suffisante pour permettre une transformation de composés polluants « indésirables » de ladite composition de convoyage en composés qui ne sont pas des polluants pour former une composition de convoyage au moins sensiblement assainie, et ;
- qu'un tel traitement d'assainissement est efficace pour assainir ladite composition de convoyage, mais permet aussi de former en sortie du dispositif d'assainissement une composition de convoyage assainie présentant une teneur réduite en composé photosensible à l'origine des espèces chimiques réactives, une telle teneur réduite en composé photosensible étant compatible avec une mise en contact de la composition de convoyage avec des fruits et/ou légumes destinés à l'alimentation humaine.

Les inventeurs ont en particulier observé qu'un tel dispositif d'assainissement et un tel procédé permettent une dépollution efficace -notamment vis-à-vis de composés colorants organiques indésirables, de mycotoxines telles que la patuline et de pesticides tels que, par exemple, le boscalide, le fludioxonil, la pyraclostrobin ou le thiacloprid- de ladite composition de convoyage, mais permettent aussi de ne laisser subsister dans ladite composition de convoyage, qu'une quantité résiduelle de composé photosensible, ladite quantité résiduelle de composé photosensible de la composition assainie étant inférieure à la teneur maximale de composé photosensible dans une composition aqueuse susceptible d'être en contact avec des denrées alimentaires et admise par la réglementation.

Sans qu'une explication ne soit donnée à cette observation, il a été constaté que la circulation de la composition à assainir dans une pluralité d'enceintes de photolyse montées en séries selon l'invention, chaque enceinte de photolyse comprenant un dispositif d'irradiation de ladite composition à assainir permet en fait d'améliorer l'efficacité d'assainissement et de diminuer la quantité résiduelle de composé photosensible en sortie du dispositif d'assainissement, ladite quantité résiduelle de composé photosensible de la composition assainie étant inférieure à la teneur maximale de composé photosensible dans une composition aqueuse susceptible d'être en contact avec des denrées alimentaires et admise par la réglementation. Il a été également constaté qu'un dispositif d'assainissement comprenant une pluralité d'enceintes de photolyse montées en série, au moins un dispositif d'irradiation étant disposé dans le volume intérieur de chacune des enceintes de photolyse, permet en fait d'assainir plus efficacement la composition à assainir que ne le fait un dispositif d'assainissement comprenant une enceinte de photolyse unique et dimensionnée par rapport à la taille du convoyeur hydraulique et du volume de composition à assainir.

Avantageusement, au moins un dispositif d'irradiation est disposé dans un volume intérieur de chaque enceinte de photolyse de façon à pouvoir être en contact avec ladite composition à assainir et irradier ladite composition à assainir s'écoulant dans chaque enceinte de photolyse.

Avantageusement, dans certains modes de réalisation conforme à l'invention, le dispositif d'assainissement comprend au moins un dispositif d'irradiation positionné de façon à permettre une irradiation d'un débit de composition à assainir comprenant au moins un composé photosensible, à former dans ladite composition à assainir au moins une espèce chimique réactive avec au moins un polluant de ladite composition de convoyage sous l'effet de l'irradiation par le dispositif d'irradiation et à assainir ladite composition à assainir.

L'invention s'applique à toute composition liquide de convoyage. Avantageusement, dans certains modes de réalisation selon l'invention, ladite composition de convoyage est une composition aqueuse. Avantageusement et dans certains modes de réalisation selon l'invention, ladite composition aqueuse de convoyage est principalement constituée d'eau, notamment présente une teneur volumique en eau supérieure à 95%, en particulier supérieure à 99%.

Au moins un composé polluant est un composé apporté dans la composition de convoyage par des fruits ou par des légumes. Il peut s'agir de pesticides appliqués sur les fruits ou sur les légumes lors de culture ou lors de leur récolte. Il peut aussi s'agir d'un colorant intrinsèque des fruits et/ou des légumes libéré dans la composition de convoyage. Il peut aussi s'agir de micro-organismes, de moisissures ou de champignons microscopiques qui sont susceptibles de libérer des mycotoxines en surface des fruits et/ou des légumes. Au moins un composé polluant peut être un composé libéré par des moisissures ou par des champignons microscopiques en surface des fruits et/ou des légumes. Au moins un composé polluant peut donc être une mycotoxine telle que, par exemple, de la patuline.

Avantageusement et dans certains modes de réalisation selon l'invention, au moins un dispositif d'assainissement est adapté pour être parcouru par un débit de composition à assainir et pour permettre l'irradiation de la composition à assainir par au moins un dispositif d'irradiation entre une entrée d'un débit de composition à assainir (dans le dispositif d'assainissement) prélevé dans un canal hydraulique du convoyeur et une sortie d'un débit de composition, dite composition assainie, (hors du dispositif d'assainissement) dirigé vers un canal hydraulique du convoyeur.

Avantageusement, et selon l'invention, le dispositif d'assainissement comprend une pluralité de dispositifs d'irradiation, chaque dispositif d'irradiation étant positionné dans une enceinte de photolyse de façon à permettre une irradiation d'un débit de composition à assainir circulant successivement dans chaque enceinte de photolyse et comprenant au moins un composé photosensible, à former dans ladite composition à assainir au moins une espèce chimique réactive avec au moins un polluant de ladite composition de convoyage sous l'effet de l'irradiation et à assainir ladite composition à assainir.

Avantageusement, chaque enceinte de photolyse du dispositif d'assainissement comprend un dispositif d'irradiation.

Avantageusement et dans certains modes de réalisation selon l'invention, au moins un dispositif d'irradiation comprend au moins une source lumineuse adaptée pour émettre un rayonnement lumineux ultraviolet, notamment à une longueur d'onde comprise entre 100 nm et 315 nm, plus particulièrement entre 100 nm et 280 nm (UV-C), sensiblement de l'ordre de 254 nm. Avantageusement, le dispositif d'assainissement d'un convoyeur hydraulique selon l'invention est adapté pour permettre un ajustement de la longueur d'onde d'irradiation selon la nature chimique et la réactivité du(des) composé(s) photosensible(s).

Avantageusement et dans certains modes de réalisation selon l'invention, au moins un composé photosensible est le peroxyde d'hydrogène. Avantageusement, la composition à assainir comprend une quantité massique de peroxyde d'hydrogène telle que le rapport de cette quantité massique sur la masse de ladite composition à assainir est comprise entre 1 ppm et 15 ppm, notamment comprise entre 1 ppm et 5 ppm, préférentiellement de l'ordre de 3 ppm. Tout autre composé photosensible apte à assurer la fonction technique susmentionnée selon l'invention peut cependant être utilisé.

Avantageusement et dans certains modes de réalisation selon l'invention, le convoyeur hydraulique comprend au moins une pompe de circulation de composition à assainir formée à partir de la composition de convoyage dans le dispositif d'assainissement. Une telle pompe de circulation est choisie pour pouvoir former un débit de composition à assainir dans le dispositif d'assainissement, irradier la composition à assainir s'écoulant dans le dispositif d'assainissement et produire une composition assainie de sorte que cette composition assainie puisse être dirigée vers un canal hydraulique. Avantageusement et selon l'invention, le convoyeur hydraulique comprend un dispositif de mélange de composition de convoyage et de composition photo-réactive et de formation de la composition à assainir en amont du dispositif d'assainissement.

Avantageusement et dans certains modes de réalisation selon l'invention, le convoyeur hydraulique comprend une pompe de distribution de composition photo-réactive dans ladite composition de convoyage. Avantageusement, la pompe de distribution de composition photo-réactive, la pompe de circulation de composition de convoyage et les dispositifs d'irradiation sont adaptés pour pouvoir former dans la composition à assainir au moins un composé actif apte à transformer en composé non polluant au moins un composé polluant de ladite composition de convoyage. Ainsi, avantageusement, la pompe de distribution est une pompe doseuse de la quantité de composition photo-réactive introduite dans ladite composition de convoyage. Avantageusement et selon l'invention, le dispositif d'assainissement comprend des moyens de mesure de la concentration de composé photosensible dans la composition de convoyage en sortie du dispositif d'assainissement et des moyens de pilotage de la pompe de distribution adaptés pour permettre un ajustement d'un débit de composition photo-réactive distribuée dans la composition de convoyage.

Avantageusement et selon l'invention, le dispositif d'assainissement comprend une pluralité d'enceintes de photolyse montées en séries de sorte que ladite composition à assainir s'écoule successivement dans la pluralité d'enceintes de photolyse, au moins un dispositif d'irradiation étant disposé dans le volume intérieur de chaque enceinte de photolyse et de façon à pouvoir être en contact avec ladite composition à assainir et irradier ladite composition à assainir s'écoulant dans chaque enceinte de photolyse.

Chaque enceinte de photolyse peut comprendre un dispositif d'irradiation unique. Cependant, rien n'empêche que chaque enceinte de photolyse comprenne une pluralité de dispositifs d'irradiation.

Dans certains modes de réalisation particuliers selon l'invention, au moins une -notamment chaque- enceinte de photolyse est de forme cylindrique de révolution et renferme une pluralité de sources lumineuses sous forme de tubes, chaque source lumineuse s'étendant parallèlement à l'axe longitudinal de ladite enceinte de photolyse et en regard les unes des autres, la pluralité de sources lumineuses étant uniformément réparties dans ladite enceinte de photolyse.

Dans certains modes de réalisation particuliers selon l'invention, au moins une -notamment chaque- enceinte de photolyse est de forme cylindrique de révolution et renferme une pluralité de sources lumineuses sous forme de tubes, chaque source lumineuse s'étendant parallèlement à l'axe longitudinal de ladite enceinte de photolyse et en regard les unes des autres, la pluralité de sources lumineuses étant réparties dans ladite enceinte de photolyse de façon à occuper, selon toute coupe transversale de ladite enceinte de photolyse, les sommets d'un polygone régulier.

Avantageusement et selon l'invention, les sources lumineuses de la pluralité de sources lumineuses sont uniformément réparties dans le volume intérieur de ladite enceinte de photolyse.

Avantageusement et selon un mode de réalisation préférentiel selon l'invention, au moins une -notamment chaque- enceinte de photolyse est de forme cylindrique de révolution et renferme cinq sources lumineuses sous forme de tubes, chaque source lumineuse s'étendant parallèlement à l'axe longitudinal de ladite enceinte de photolyse et en regard les unes des autres, les cinq sources lumineuses étant réparties dans ladite enceinte de photolyse de façon à occuper selon toute coupe transversale de ladite enceinte de photolyse les sommets d'un pentagone régulier.

Rien n'empêche cependant que les sources lumineuses soient réparties dans ladite enceinte de photolyse de façon à occuper selon toute coupe transversale de ladite enceinte de photolyse les sommets d'un hexagone régulier.

Un convoyeur hydraulique selon l'invention est adapté pour pouvoir former un débit de composition à assainir dans le dispositif d'assainissement de sorte que ladite composition à assainir s'écoule dans le dispositif d'assainissement entre une entrée de ladite composition à assainir et une sortie de composition assainie et pour pouvoir réaliser une irradiation de ladite composition à assainir par un dispositif d'irradiation. Le dispositif d'assainissement est adapté pour pouvoir contrôler l'efficacité de l'assainissement de ladite composition à assainir en ajustant au moins l'un des paramètres suivants :
- le débit de ladite composition à assainir dans le dispositif d'assainissement ;
- l'intensité lumineuse délivrée par le dispositif d'irradiation et l'intensité lumineuse reçue par ladite composition à assainir dans le dispositif d'assainissement, et ;
- la concentration de composé photosensible dans ladite composition à assainir.

Avantageusement et dans certains modes de réalisation particuliers selon l'invention, le dispositif d'assainissement comprend une entrée de composition photo-réactive située en amont d'une première enceinte de photolyse de la pluralité d'enceintes de photolyse. L'expression «première enceinte» est définie par rapport à la direction du flux de composition à assainir dans le dispositif d'assainissement. Rien n'empêche que le dispositif d'assainissement comprenne une entrée de composition photo-réactive dans la première enceinte de photolyse de la pluralité d'enceintes de photolyse. On entend par première enceinte de photolyse de la pluralité d'enceintes de photolyse, l'enceinte de photolyse de la pluralité d'enceintes de photolyse située la plus en amont dans le dispositif d'assainissement.

Avantageusement, le dispositif d'assainissement comprend une entrée unique de composition photo-réactive située en amont de la première enceinte de photolyse de la pluralité d'enceintes de photolyse. Rien n'empêche cependant que le dispositif d'assainissement comprenne une pluralité d'entrées de composition photo-réactive réparties dans le dispositif d'assainissement.

L'invention concerne également une installation de tri -notamment une installation de tri et d'emballage- comprenant au moins un convoyeur hydraulique selon l'invention. Une installation de tri (et d'emballage) d'objets flottants tels que des fruits et/ou des légumes selon l'invention comprend donc au moins un convoyeur hydraulique selon l'invention équipé d'un dispositif d'assainissement d'une composition de convoyage d'objets flottants choisis dans le groupe formé des fruits et des légumes flottants.

L'invention concerne également un procédé d'assainissement mis en oeuvre dans un convoyeur selon l'invention. Elle concerne donc un procédé d'assainissement d'une composition, dite composition de convoyage, liquide de convoyage d'objets flottants choisis dans le groupe formé des fruits et des légumes, d'un convoyeur hydraulique du type à recirculation de ladite composition de convoyage, caractérisé en ce que :
- on mélange au moins une partie de ladite composition de convoyage avec une quantité de composition, dite composition photo-réactive, comprenant au moins un composé photosensible choisi pour pouvoir former, sous l'effet d'une irradiation par au moins un dispositif d'irradiation, au moins un composé, dit composé actif, apte à pouvoir transformer par réaction -notamment par oxydation- chimique au moins un composé polluant de ladite composition de convoyage en composé non polluant, et ;
- on soumet ce mélange, dit composition à assainir, à cette irradiation de façon à former une composition au moins partiellement assainie ; caractérisé en ce qu'on soumet ladite composition à assainir à cette irradiation dans un dispositif d'assainissement parcouru par un débit de ladite composition à assainir, le dispositif d'assainissement comprenant au moins deux enceintes de photolyse montées en séries de sorte que ladite composition à assainir s'écoule successivement dans lesdites au moins deux enceintes de photolyse, au moins un dispositif d'irradiation étant disposé dans un volume intérieur de chaque enceinte de photolyse.

Avantageusement, dans certains modes de réalisation selon l'invention, on réalise un traitement d'assainissement de la composition de convoyage en réalisant une circulation de composition de convoyage en circuit fermé dans le dispositif d'assainissement et en irradiant dans le dispositif d'assainissement une composition à assainir obtenue par mélange d'au moins une partie de la composition de convoyage avec une composition photo-réactive.

Avantageusement, et selon l'invention, on adapte la quantité de ladite composition photo-réactive et des conditions d'irradiation de façon à optimiser la dégradation des polluants et la diminution de leur concentration dans la composition de convoyage.

Avantageusement, dans certains modes de réalisation selon l'invention, on adapte la quantité de ladite composition photo-réactive et des conditions d'irradiation de façon que la composition assainie présente un taux résiduel de composé photosensible qui soit inférieur à un taux maximum règlementaire prédéterminé. Dans ces conditions, un tel procédé est efficace pour assainir rapidement une composition de convoyage mais permet aussi de ne laisser subsister dans ladite composition de convoyage, qu'une quantité résiduelle de peroxyde d'hydrogène dans la composition assainie et inférieure à la teneur maximale de peroxyde d'hydrogène admise par la réglementation pour une composition liquide susceptible d'être en contact avec des denrées alimentaires.

Avantageusement, dans certains modes de réalisation selon l'invention, au moins un composé photosensible est le peroxyde d'hydrogène.

Avantageusement et dans certains modes de réalisation selon l'invention, l'irradiation est une illumination par un rayonnement lumineux ultraviolet -notamment un rayonnement lumineux ultraviolet présentant une longueur d'onde comprise entre 100 nm et 315 nm, plus particulièrement entre 100 nm et 280 nm (UV-C), sensiblement de l'ordre de 254 nm- permettant la photolyse du peroxyde d'hydrogène.

Les inventeurs ont aussi observé qu'un procédé selon l'invention permet d'assainir une composition de convoyage formée de tout type d'eau. Ils ont observé qu'un procédé selon l'invention permet d'assainir une composition de convoyage formée à partir d'eau de dureté élevée (par exemple d'une eau comprenant du bicarbonate de calcium à une concentration de l'ordre de 350 mg/L) ou à partir d'une eau de dureté intermédiaire (par exemple d'une eau comprenant du bicarbonate de calcium à une concentration de l'ordre de 200 mg/L).

Avantageusement et dans certains modes de réalisation selon l'invention, on réalise l'irradiation de ladite composition à assainir à température ambiante. Un tel procédé selon l'invention est donc simple à mettre en oeuvre et ne nécessite pas d'utiliser des moyens spécifique de chauffage et/ou de refroidissement de la composition à assainir.

Avantageusement, dans certains modes de réalisation d'un procédé selon l'invention, on assainit une composition de convoyage comprenant, à titre de polluant, au moins un pesticide choisi dans le groupe formé des fongicides, des bactéricides et des insecticides.

L'invention concerne aussi un dispositif d'assainissement d'une composition de convoyage pour la mise en oeuvre d'un procédé selon l'invention.

L'invention concerne donc aussi un dispositif d'assainissement d'une composition, dite composition de convoyage, liquide de convoyage d'objets flottants choisis dans le groupe formé des fruits et des légumes, pour convoyeur hydraulique, du type à recirculation de ladite composition de convoyage, ledit dispositif d'assainissement comprenant :
- au moins un dispositif d'irradiation ;
- au moins deux enceintes de photolyse montées en séries de façon à pouvoir être parcourues par un débit d'une composition, dite composition à assainir, liquide formée par mélange d'une composition, dite composition de convoyage, liquide circulant dans un canal hydraulique du convoyeur hydraulique et d'une composition, dite composition photo-réactive, comprenant au moins un composé photosensible choisi pour pouvoir former, sous l'effet d'une irradiation par au moins un dispositif d'irradiation, au moins un composé, dit composé actif, apte à pouvoir transformer par réaction chimique au moins un composé polluant de ladite composition de convoyage en composé non polluant ;
caractérisé en ce qu'au moins un dispositif d'irradiation est disposé dans un volume intérieur de chaque enceinte de photolyse.

L'invention concerne donc un dispositif d'assainissement d'une composition de convoyage, comprenant un dispositif d'irradiation disposé pour pouvoir irradier une composition, dite composition à assainir, formée par mélange d'au moins une partie de ladite composition de convoyage et d'une quantité d'une composition, dite composition photo-réactive, comprenant au moins un composé photosensible choisi pour pouvoir former, sous l'effet d'une irradiation par un dispositif d'irradiation, au moins un composé, dit composé actif, apte à transformer au moins un composé polluant de ladite composition de convoyage en composé non polluant par réaction chimique entre le composé actif et le composé polluant.

Ainsi, avantageusement et selon l'invention, le dispositif d'assainissement comprend une entrée d'un débit de ladite composition à assainir dans le dispositif d'assainissement et une sortie d'un débit d'une composition assainie, la sortie du débit de composition assainie étant distincte de l'entrée de débit de composition à assainir.

Avantageusement et selon l'invention, le dispositif d'assainissement comprend une pluralité d'enceintes de photolyse montées en séries de sorte que ladite composition à assainir puisse s'écouler successivement dans la pluralité d'enceintes de photolyse, au moins un dispositif d'irradiation étant disposé dans un volume intérieur de chaque enceinte de photolyse. Chaque dispositif d'irradiation est disposé de façon à pouvoir être en contact avec ladite composition à assainir et irradier ladite composition à assainir s'écoulant dans chaque enceinte de photolyse. Avantageusement, chaque enceinte de photolyse comprend au moins un dispositif d'irradiation. Avantageusement, le dispositif d'assainissement comprend entre deux et dix enceintes de photolyse montées en série. Avantageusement, le dispositif d'assainissement comprend entre trois et six enceintes de photolyse montées en série. Avantageusement, le dispositif d'assainissement comprend quatre enceintes de photolyse montées en série.

Avantageusement, dans certains modes de réalisation selon l'invention, au moins une enceinte de photolyse est de forme cylindrique de révolution et renferme une pluralité de sources lumineuses sous forme de tubes, chaque tube s'étendant parallèlement à l'axe longitudinal de ladite au moins une enceinte de photolyse et en regard des autres, les sources lumineuses de la pluralité de source lumineuses étant réparties dans ladite enceinte de photolyse de façon à occuper selon toute coupe transversale de ladite enceinte de photolyse les sommets d'un polygone régulier.

Avantageusement, dans certains modes de réalisation selon l'invention, au moins une enceinte de photolyse est de forme cylindrique de révolution et renferme cinq sources lumineuses sous forme de tubes, chaque tube s'étendant parallèlement à l'axe longitudinal de ladite au moins une enceinte de photolyse et en regard des autres, les cinq sources lumineuses étant réparties dans ladite enceinte de photolyse de façon à occuper selon toute coupe transversale de ladite enceinte de photolyse les sommets d'un pentagone régulier.

L'invention concerne également un convoyeur hydraulique, une installation de tri d'objets flottants, un procédé d'assainissement et un dispositif d'assainissement d'une composition de convoyage, caractérisés en combinaison par tout ou partie des caractéristiques mentionnées ci-dessus ou ci-après.

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue d'ensemble d'une enceinte de photolyse d'un dispositif d'assainissement selon l'invention ;
- la figure 2 est une vue de dessus d'une enceinte de photolyse d'un dispositif d'assainissement selon l'invention ;
- la figure 3 est une représentation schématique d'un dispositif d'assainissement selon un premier aspect de l'invention ;
- la figure 4 est une représentation schématique d'un dispositif d'assainissement selon un autre aspect de l'invention ;
- la figure 5 est une représentation graphique de la neutralisation de boscalide par une variante d'un procédé selon l'invention ;
- la figure 6 est une représentation graphique de la neutralisation de quatre pesticides par un procédé selon l'invention, et
- la figure 7 est une représentation graphique de la neutralisation de boscalide par la mise en oeuvre d'une variante d'un procédé selon l'invention.

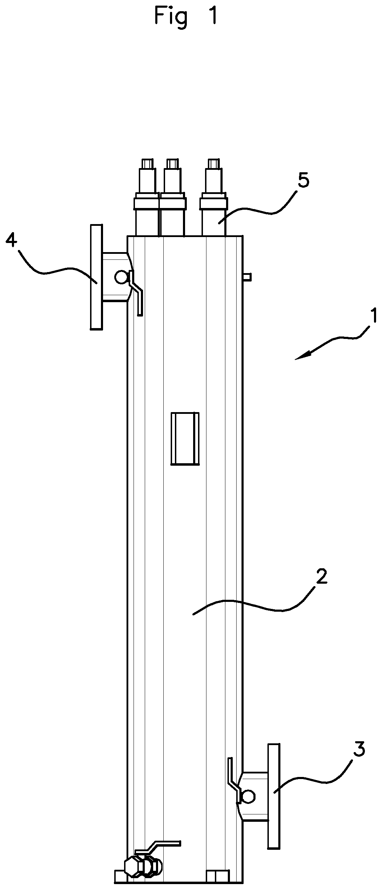

Une enceinte 1 de photolyse d'un dispositif d'assainissement d'une composition de convoyage d'un convoyeur hydraulique selon un mode de réalisation de l'invention est représentée en figure 1. Cette enceinte 1 de photolyse comprend un corps 2 cylindrique rigide. Le corps 2 cylindrique est creux et étanche aux liquides et est de nature à permettre une circulation d'une composition liquide aqueuse à l'intérieur du corps cylindrique entre une entrée 3 de composition à assainir et une sortie 4 de composition assainie, présentant une moindre quantité de composés polluants que la composition à assainir, notamment sensiblement exempte de composés polluants. L'entrée 3 de composition à assainir est en communication de fluide avec un canal hydraulique d'un convoyeur hydraulique de convoyage d'objets flottants tels que des fruits ou des légumes d'une installation de tri et d'emballage de tels produits. La sortie 4 de composition assainie est en communication de fluide avec ce même canal hydraulique de sorte que la composition de convoyage peut être indéfiniment recyclée dans le convoyeur hydraulique selon l'invention. Ladite enceinte 1 de photolyse permet de réaliser un recyclage en circuit fermé de la composition de convoyage du convoyeur hydraulique selon l'invention. Ladite enceinte 1 de photolyse permet de réaliser un assainissement de la composition de convoyage de l'installation par illumination de la composition de convoyage circulant dans ladite enceinte 1 de photolyse. L'enceinte 1 de photolyse comprend au moins une source 5 lumineuse disposée dans un espace interne du corps 2 cylindrique et au contact de la composition à assainir circulant dans ladite enceinte 1 de photolyse.

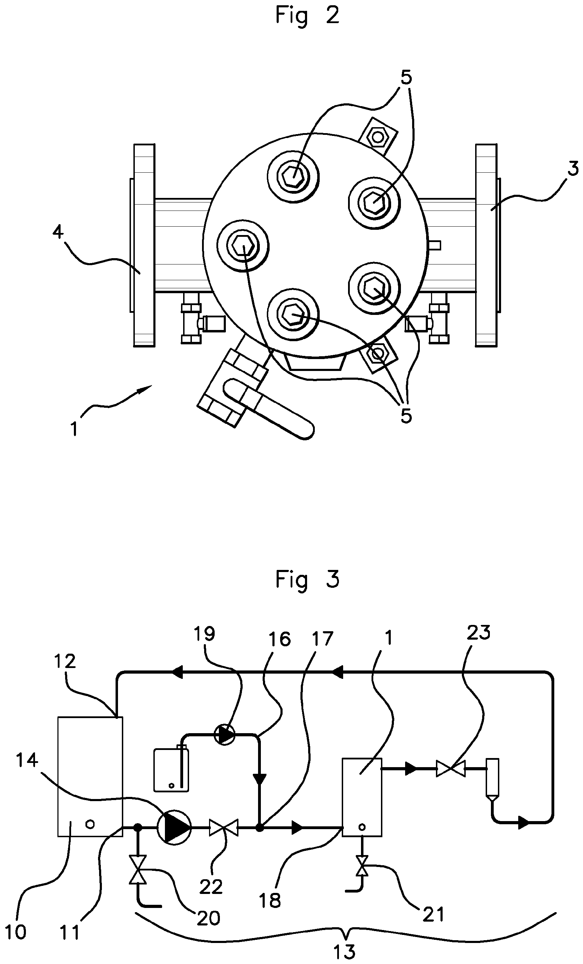

L'enceinte 1 de photolyse représentée aussi en figure 2 présente cinq sources lumineuses formées de tubes lumineux répartis dans l'espace interne du corps 2 cylindrique, les cinq tubes lumineux s'étendant parallèlement les uns aux autres dans l'espace interne et sensiblement parallèlement à l'axe longitudinal du corps 2 cylindrique. Avantageusement, les cinq tubes lumineux sont répartis les uns par rapport aux autres dans l'espace interne du corps 2 cylindrique de sorte que chaque tube lumineux occupe dans toute section transversale du corps 2 cylindrique un sommet d'un pentagone régulier. Dans cette configuration particulière, les tubes lumineux permettent une illumination optimale de la composition à assainir traversant l'enceinte 1 de photolyse selon un débit orienté parallèlement à l'axe longitudinal du corps 2 cylindrique.

Un dispositif 13 d'assainissement d'une composition de convoyage d'objets flottants tels que des fruits ou des légumes est représenté schématiquement en figure 3 couplé à un convoyeur hydraulique selon l'invention. Un tel convoyeur comprend un contenant 10 de convoyage d'objets flottants dans laquelle des produits tels que des fruits ou des légumes sont convoyés par flottaison. Le contenant 10 peut être un canal hydraulique de convoyage d'objets flottants s'étendant en partie amont d'une installation de tri et d'emballage de fruits et légumes ou un canal hydraulique de convoyage d'objets flottants triés s'étendant en partie aval de l'installation de tri et d'emballage de fruits et légumes. Il peut aussi s'agir d'un convoyeur hydraulique d'objets flottants tels que des fruits ou des légumes flottants vers une installation de tri et d'emballage desdits produits. Le contenant 10 est dimensionné selon la taille de l'installation de tri et d'emballage d'objets flottants tels que des fruits et des légumes, selon le nombre et les dimensions des canaux hydrauliques de l'installation. Un tel contenant 10 peut par exemple contenir un volume de composition de convoyage compris entre 10 m³ et 1000 m³, notamment de l'ordre de 90 m³ à 100 m³.

Le contenant 10 présente une bouche 11 de prélèvement d'une composition à assainir et une bouche 12 de recyclage d'une composition assainie dans le contenant 10. Le dispositif 13 d'assainissement s'étend entre la bouche 11 de prélèvement et la bouche 12 de recyclage du contenant 10 et forme un circuit externe au contenant 10. Le dispositif 13 d'assainissement comprend une pompe 14 de circulation de la composition à assainir adaptée pour pouvoir prélever de ladite composition à assainir depuis la bouche 11 de prélèvement du contenant 10, faire circuler la composition à assainir dans un circuit externe vers une enceinte 1 de photolyse et refouler la composition assainie dans la bouche 12 de recyclage du contenant 10. La pompe 14 de circulation est adaptée pour pouvoir contrôler le débit de composition à assainir à une valeur prédéterminée. Par exemple, le débit de la pompe 14 de circulation peut varier entre quelques m³/h et 100 m³/h.

Le dispositif 13 d'assainissement comprend une pluralité d'enceintes de photolyse (référencée 1) comprenant au moins une source lumineuse susceptible d'illuminer la composition à assainir circulant dans chaque enceinte de photolyse. Chaque enceinte de photolyse présente un volume intérieur de l'ordre de 30 à 40 litres et cinq tubes fluorescents à 254 nm d'une puissance de 200 watts susceptibles de procurer une intensité d'irradiation de la composition à assainir d'une valeur de l'ordre de 500 mJ/cm² avec un débit de composition à assainir d'une valeur de l'ordre de 6 m³/h dans chaque enceinte de photolyse. D'autres valeurs sont possibles.

Le dispositif 13 d'assainissement comprend aussi une voie 16 d'introduction d'une composition photo-réactive dans le circuit externe. La voie 16 d'introduction débouche de préférence dans le circuit externe par une entrée 17 de composition photo-réactive positionnée en amont de la pluralité d'enceintes de photolyse de sorte que l'introduction de la composition photo-réactive dans la composition de convoyage forme la composition à assainir à proximité d'une entrée 18 de composition dans la pluralité d'enceintes de photolyse. La composition photo-réactive comprend au moins un composé photosensible apte à former dans la composition à assainir au moins une espèce chimique réactive avec au moins un polluant présent dans la composition de convoyage sous l'effet de l'illumination par la(les) source(s) lumineuse(s). La voie 16 d'introduction comprend une pompe 19 de distribution de la composition photo-réactive dans le circuit externe et dans la pluralité d'enceintes de photolyse.

La pompe 19 de distribution du dispositif 13 d'assainissement permet donc d'ajuster le débit de composition photo-réactive à introduire dans le débit de composition de convoyage prélevé du contenant 10 de façon à former un débit de composition à assainir dans la pluralité d'enceintes de photolyse et pour permettre une dépollution de la composition à assainir et la formation d'une composition assainie en sortie de la pluralité d'enceintes de photolyse.

La composition assainie est réintroduite dans le contenant 10 sous l'effet de la pompe 14 de circulation. La composition assainie présente en outre une concentration en composé photosensible -notamment en peroxyde d'hydrogène- inférieure à la concentration maximum règlementairement acceptable pour l'utilisation de la composition assainie au contact de denrées alimentaires. On ajuste le débit de la pompe 14 de recirculation par rapport au volume du contenant 10 et le débit de la pompe 19 de distribution de la composition photo-réactive de façon que la proportion de polluant dans la composition de convoyage soit maintenue à une valeur faible et acceptable pour son utilisation au contact de denrées alimentaires.

Un convoyeur hydraulique selon l'invention représenté schématiquement en figure 3 présente aussi une vanne 20 de vidange du convoyeur hydraulique. Il présente aussi une vanne 21 de vidange de la pluralité d'enceintes de photolyse permettant la mise en oeuvre d'opérations d'entretien et de maintenance de la pluralité d'enceintes de photolyse. Un convoyeur hydraulique selon l'invention représenté schématiquement en figure 3 présente aussi des vannes 22, 23 d'ajustement du débit du débit de composition de convoyage dans le dispositif 13 d'assainissement.

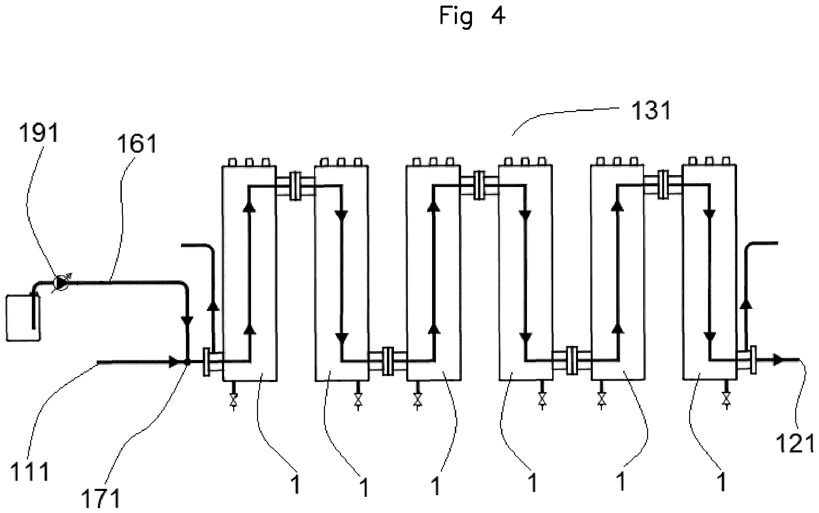

Un autre mode de réalisation d'un dispositif 131 d'assainissement d'une composition de convoyage d'objets flottants tels que des fruits ou des légumes est représenté schématiquement en figure 4. En figure 4, n'est pas représenté dans sa totalité le convoyeur hydraulique selon l'invention.

Le dispositif 131 d'assainissement s'étend entre une bouche 111 de prélèvement de composition de convoyage dans un canal hydraulique de convoyage d'objets flottants d'un convoyeur hydraulique et une bouche 121 de recyclage de composition de convoyage assainie dans un canal hydraulique du convoyeur hydraulique. Le dispositif 131 d'assainissement comprend une pluralité d'enceintes 1 de photolyse montées en série et permettant une circulation de la composition à assainir successivement dans chaque enceinte 1 de photolyse dans laquelle elle est irradiée.

Chaque enceinte 1 de photolyse comprend au moins une source lumineuse susceptible d'illuminer la composition à assainir circulant dans le dispositif 131 d'assainissement. Chaque enceinte 1 de photolyse peut être du type décrit en figure 1 et en figure 2. Chaque enceinte de photolyse présente par exemple un volume intérieur de l'ordre de 30 à 40 litres et cinq tubes fluorescents à 254 nm d'une puissance de 200 watts susceptibles de procurer une intensité d'irradiation de la composition à assainir d'une valeur de l'ordre de 500 mJ/cm² avec un débit de composition à assainir d'une valeur de l'ordre de 6 m³/h dans chaque enceinte 1 de photolyse. D'autres valeurs sont possibles.

Le dispositif 13 d'assainissement comprend aussi une voie 161 d'introduction d'une composition photo-réactive en amont du dispositif 131 d'assainissement. La voie 161 d'introduction débouche de préférence dans le dispositif 131 d'assainissement par une entrée 171 de composition photo-réactive positionnée en amont de la première enceinte (amont) 1 de photolyse de sorte que le mélange de la composition photo-réactive dans la composition de convoyage forme la composition à assainir à proximité d'une entrée 181 de composition dans l'enceinte 1 amont de photolyse. La voie 161 d'introduction comprend une pompe 191 doseuse (de distribution) de la composition photo-réactive dans le dispositif 131 d'assainissement et dans l'enceinte 1 amont de photolyse.

### EXEMPLE 1

On établit un débit de composition de convoyage d'une valeur de 6 m³/h dans le circuit externe et un débit de composition photo-réactive d'une valeur de 3 dm³/h, la composition photo-réactive étant une solution aqueuse de peroxyde d'hydrogène à une concentration initiale de 4 g/L. La composition à assainir ainsi obtenue comprend alors une proportion de peroxyde d'hydrogène de l'ordre de 2 ppm et est suffisante pour permettre la dépollution de la composition à assainir en sortie de la cuve de photolyse formée d'une unique enceinte de photolyse comprenant cinq tubes fluorescents d'une puissance individuelle de 200W.

### EXEMPLE 2

On choisit un convoyeur hydraulique d'une installation de tri et d'emballage de pommes contenant un volume de 90 m³ d'une composition de convoyage contenant du « BELLIS » à une concentration de 50 mg/L (et du boscalide à une concentration de 22µg/L). On établit, au moyen de la pompe 14 de circulation, un débit de la composition de convoyage d'une valeur de 36 m³/h dans le circuit externe et, au moyen de la pompe 19 de distribution, un débit de composition photo-réactive d'une valeur de 270 cm³/h, la composition photo-réactive étant une solution aqueuse de peroxyde d'hydrogène à une concentration initiale de 400 g/L, soit 108 g de peroxyde d'hydrogène pur. Dans ces conditions de débit de la composition de convoyage, la totalité du volume de la composition de convoyage contenu dans l'installation est théoriquement traité en 2,5 heures. La composition à assainir obtenue à l'entrée du dispositif d'assainissement comprend alors une proportion initiale de peroxyde d'hydrogène de l'ordre de 3 ppm et est suffisante pour permettre la dépollution de la composition à assainir en sortie du dispositif d'assainissement formé de 6 enceintes de photolyse montées en série, chaque enceinte comprenant cinq tubes fluorescents d'une puissance individuelle de 200W.

Les résultats obtenus sont donnés au tableau 1 ci-après dans lequel les valeurs de concentration en boscalide dans la composition à assainir en entrée de la cuve de photolyse (EC), en sortie de la troisième enceinte (S3E) de la cuve de photolyse et en sortie de la sixième enceinte (S6E) de la cuve de photolyse sont données en µg/L. La colonne S6E/EC représente le rapport multiplié par 100 de la concentration en boscalide en sortie de la sixième enceinte (S6E) de la cuve de photolyse sur la concentration en boscalide en entrée de la cuve de photolyse (EC). La colonne C/C₀ représente le rapport de la concentration en boscalide mesurée en entrée de la cuve de photolyse au cours du temps sur la concentration initiale (t = 0) en boscalide.

**Tableau 1**

| Temps, heures | Boscalide, µg/L | | | S6E/EC, % | C/C₀ |
|---|---|---|---|---|---|
| | EC | S3E | S6E | | |
| 0 | 21,43 | - | - | - | - |
| 1,25 | 16,64 | - | 1,28 | 92 | 0,79 |
| 2,5 | 15,68 | 3,96 | 0,99 | 94 | 0,73 |
| 3,75 | 15,56 | 3,38 | 0,91 | 94 | 0,73 |
| 5 | 14,06 | 2,71 | 0,56 | 94 | 0,66 |
| 7,5 | 8,25 | 1,78 | - | - | 0,38 |

Le taux de dégradation du boscalide entre l'entrée et la sortie de la cuve de photolyse est élevé et supérieur à 90%. Ce traitement permet d'éliminer 62% du boscalide de la composition de convoyage du convoyeur hydraulique en 7,5 heures.

### EXEMPLE 3

On choisit un convoyeur hydraulique d'une installation de tri et d'emballage de pommes contenant un volume de 90 m³ d'eau à titre de composition de convoyage de pommes Ariane, Rosy Glow et Pink Lady. On établit un débit de la composition de convoyage d'une valeur de 36 m³/h dans le circuit externe et un débit de composition photo-réactive d'une valeur de 2,8 à 3,5 dm³/h, la composition photo-réactive étant une solution aqueuse de peroxyde d'hydrogène à une concentration initiale de 400 g/L. Dans ces conditions de débit, la totalité du volume de la composition de convoyage du convoyeur hydraulique est théoriquement traité en 2,5 heures. La composition à l'entrée du dispositif d'assainissement comprend une proportion initiale de peroxyde d'hydrogène de l'ordre de 3 ppm suffisante pour permettre la dépollution de la composition en sortie du dispositif d'assainissement formé de six enceintes de photolyse montées en série, chaque enceinte comprenant cinq tubes fluorescents d'une puissance individuelle de 200W.

Les résultats obtenus sont donnés au tableau 2 ci-après dans lequel les valeurs de concentration en boscalide issu des pommes convoyées avec la composition à assainir en entrée du dispositif d'assainissement (EC) et en sortie du dispositif d'assainissement (SC) sont données en µg/L. La colonne SE/EC représente le rapport multiplié par 100 de la concentration en boscalide en sortie de la sixième enceinte de la cuve de photolyse sur la concentration en boscalide en entrée de la cuve de photolyse (EC). La colonne C/C₀ représente le rapport de la concentration en boscalide mesurée en entrée du dispositif d'assainissement au cours du temps sur la concentration initiale (t = 0) en boscalide.

**Tableau 2**

| Temps, heures | Boscalide, µg/L | | SC/EC, % | C/C₀ |
|---|---|---|---|---|
| | EC | SC | | |
| 0 | 2,83 | - | 100 | - |
| 4 | 4,76 | 0,065 | 98,6 | - |
| 7 | 2,84 | 0,206 | 92,8 | - |
| 7,1 | 4,19 | - | 100 | 1 |
| 10,5 | 1,73 | 0,062 | 96,4 | 0,41 |
| 12,5 | 1,35 | - | 100 | 0,32 |
| 14,75 | 1,71 | 0,058 | 96,6 | 0,41 |
| 17,25 | 1,18 | 0,040 | 96,6 | 0,28 |
| 19,25 | 1,88 | - | 100 | 0,45 |
| 22,75 | 1,07 | 0,064 | 94 | 0,25 |
| 24,75 | 0,64 | 0,057 | 91,2 | 0,15 |
| 28,75 | 0,66 | 0,039 | 94 | 0,16 |
| 29,75 | 0,93 | - | 100 | 0,22 |
| 32,25 | 0,79 | 0,040 | 95 | 0,19 |
| 34,75 | 0,73 | 0,043 | 94,1 | 0,17 |

Entre 90% et 100% du boscalide de la composition de convoyage est éliminé lors de ce traitement.

### EXEMPLE 4 - Pilote semi-industriel

Un dispositif pilote semi-industriel selon un aspect de l'invention comprend une cuve de recirculation d'eau à traiter d'un volume de 1000 L, une pompe de circulation assurant un débit de circulation de l'eau à traiter dans un dispositif d'assainissement avec un débit compris entre 4 m³ à 8 m³/h. Le dispositif d'assainissement comprend une enceinte de photolyse comprenant une entrée d'eau en provenance de la cuve de recirculation et une sortie d'eau assainie dirigée vers la cuve de recirculation. L'enceinte de photolyse est formée d'une enveloppe tubulaire rigide dont la paroi externe est opaque à la lumière et formant un espace intérieur adapté pour accueillir cinq tubes fluorescents d'axe longitudinal s'étendant parallèlement à l'axe longitudinal de l'enveloppe tubulaire rigide. Le volume interne du réacteur de décontamination est de l'ordre de 32 L.

Les cinq tubes fluorescents sont des tubes de 200 W émettant à une longueur d'onde de 254 nm et disposés longitudinalement dans l'enveloppe tubulaire selon les cinq sommets d'un pentagone régulier et au contact de l'eau à traiter circulant dans l'enceinte de photolyse. Dans cette configuration du dispositif d'assainissement, l'eau à assainir circulant au contact des cinq tubes fluorescents subit une illumination sensiblement homogène et de l'ordre de 500 mJ/cm² pour une valeur de débit de circulation d'eau à assainir de l'ordre de 6 m³/h. Le pilote semi-industriel comprend aussi une cuve de stockage d'une solution aqueuse de peroxyde d'hydrogène (H₂O₂) équipée d'une pompe de distribution de ladite solution dans le débit de circulation d'eau à assainir débouchant dans le circuit d'eau à assainir en amont et à proximité de l'enceinte de photolyse. La concentration du peroxyde d'hydrogène dans la solution aqueuse de peroxyde d'hydrogène est comprise entre 2 mg/L et 13 mg/L. Le débit de consigne de la pompe de distribution de solution d'H₂O₂ est maintenu à une valeur de 4 L/h.

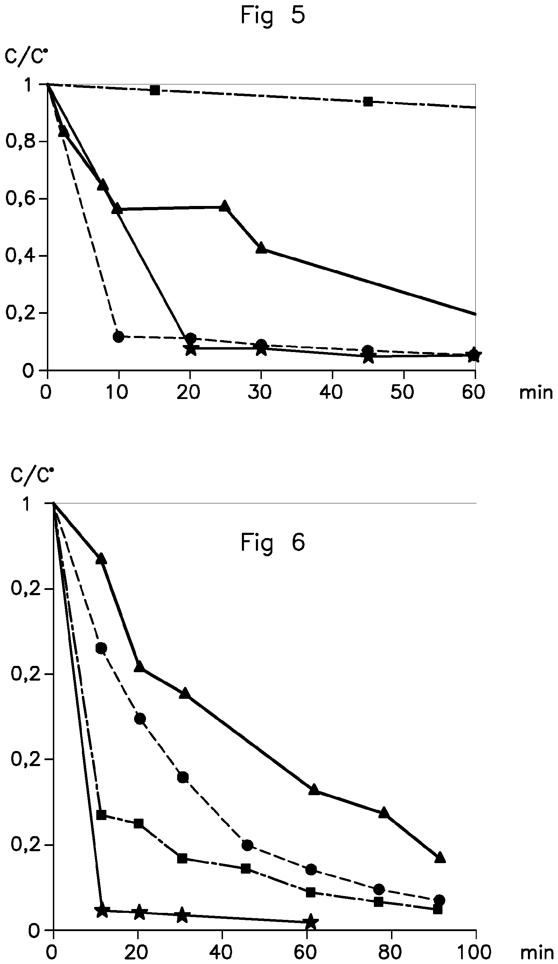

La figure 5 représente l'évolution du rapport de la valeur de la concentration de boscalide dans la cuve de recirculation sur la valeur de la concentration initiale de boscalide dans la cuve de recirculation. Le débit de la pompe de recyclage est de 6 m³/h et la concentration initiale de boscalide dans la cuve de recirculation est de 250 µg /L. Les 5 lampes du dispositif d'assainissement sont allumées. Sous illumination et en absence de peroxyde d'hydrogène (courbe identifiée par des symboles ■), la dégradation du boscalide est limitée et atteint 10% du boscalide de départ au bout d'une heure de traitement. L'addition initiale (courbe identifiée par des symboles *) de peroxyde d'hydrogène à une concentration de 13 mg/L, ou l'addition successive (courbe identifiée par des symboles ●) de 3 doses de peroxyde d'hydrogène à une concentration de 13 mg/L ne présentent pas de différence majeure sur le taux final (95%) de dégradation du boscalide. L'addition en continu (courbe identifiée par des symboles ▲) de peroxyde d'hydrogène à une concentration de 2 mg/L procure une dégradation initiale du boscalide équivalente à celle obtenue avec l'addition de peroxyde d'hydrogène à la concentration 13 mg/L. L'interruption de cette addition (entre 10 min et 25 min) conduit à un arrêt de la dégradation du boscalide démontrant la consommation totale et rapide du peroxyde d'hydrogène dans la composition de convoyage. Le redémarrage de l'addition de peroxyde d'hydrogène à la concentration 2 mg/L conduit à une reprise de la dégradation du boscalide dans la composition de convoyage.

### EXEMPLE 5 - Assainissement vis-à-vis de différents pesticides

On réalise dans un dispositif pilote semi-industriel tel que décrit ci-dessus une étude de la dégradation de boscalide, de thiaclopride, de fludioxonil et de pyraclostrobine. Le débit de la composition de convoyage procuré par la pompe de recirculation est de 6 m³/h. La concentration initiale de boscalide dans la cuve de recirculation est de 250 µg /L. La concentration initiale de thiaclopride dans la cuve de recirculation est de 100 µg /L. La concentration initiale de fludioxonil dans la cuve de recirculation est de 100 µg /L. La concentration initiale de pyraclostrobine dans la cuve de recyclage est de 125 µg /L. La concentration initiale de peroxyde d'hydrogène dans la composition à assainir est de 2 mg/L. Les cinq lampes de l'enceinte de photolyse sont allumées. Les résultats sont donnés en figure 6 qui montre que le boscalide (▲) est dégradé à 70% en 1 heure, la pyraclostrobine (●) est dégradée à 85% en 1 heure, le fludioxonil (■) est dégradé à 90% en 1 heure et le thiaclopride (*) est dégradé à plus de 95% en 1 heure.

### EXEMPLE 6 - Assainissement vis-à-vis de différentes quantités de boscalide

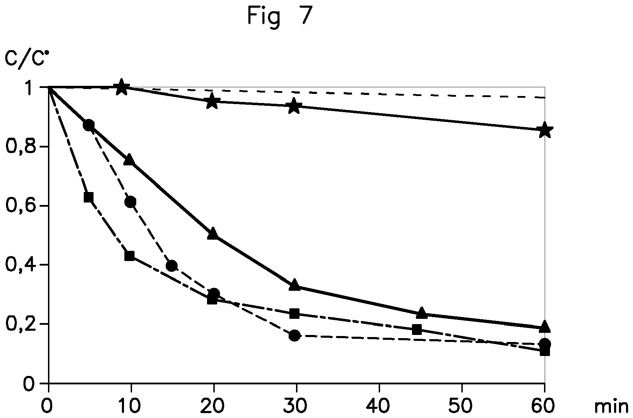

On réalise dans un dispositif pilote semi-industriel tel que décrit ci-dessus une étude de la dégradation de boscalide à des concentrations de 25 µg/L, 80 µg/L et 200 µg/L. Le débit de la composition de convoyage procuré par la pompe de recyclage est de 6 m³/h. Une solution aqueuse de peroxyde d'hydrogène est ajoutée en continu en amont du dispositif d'assainissement de sorte que la concentration initiale de peroxyde d'hydrogène dans la composition à assainir est de 2 mg/L. Les résultats sont présentés en figure 7 dans laquelle la courbe en pointillé (---) représente un traitement par illumination, la courbe identifiée par des (*) représente un traitement avec du peroxyde d'hydrogène seul, c'est-à-dire sans illumination à 254 nm, la courbe (■) représente un traitement d'une composition à assainir comprenant du boscalide à une concentration de 25 µg/L, la courbe (○) représente un traitement d'une composition à assainir comprenant du boscalide à une concentration de 80 µg/L et la courbe (▲) représente un traitement d'une composition à assainir comprenant du boscalide à une concentration de 200 µg/L. Un taux résiduel de boscalide inférieur à 80% est obtenu.

### EXEMPLE 7 - Avantages procurés par un procédé et un dispositif de dépollution selon l'invention

Une étude comparative de l'impact procuré par une exposition du modèle amphibien *Xenopus laevis* à une composition de convoyage comprenant du boscalide, assainie ou non par un procédé de dépollution selon l'invention a été réalisée. Il a été observé qu'une composition de convoyage comprenant initialement du boscalide et assainie par un procédé de dépollution selon l'invention n'induit pas de mortalité (tel que mesurée selon la norme OCDE 203, 1992) sur des larves du modèle biologique amphibien *Xenopus laevis* mises en contact avec une telle composition pendant 96 heures ou pendant 12 jours. En outre, il a été observé qu'une composition de convoyage comprenant initialement du boscalide et assainie par un procédé de dépollution selon l'invention n'induit pas de dommages irréparables à l'ADN du modèle biologique amphibien *Xenopus laevis* mises en contact avec une telle composition pendant 12 jours (selon la norme ISO 21427-1, 2006), contrairement à une composition de convoyage comprenant du boscalide et non-assainie par un procédé de dépollution selon l'invention qui induit la formation de micronoyaux chez les larves de cet amphibien.

### EXEMPLE 8 - Essai comparatif

On réalise un essai comparatif réalisé avec un dispositif pilote semi-industriel tel que décrit à l'exemple 4 et un dispositif d'assainissement selon l'invention d'un convoyeur hydraulique d'une installation de tri et d'emballage de pommes tel que décrit à l'exemple 3.

Le pilote semi-industriel comprend une cuve de composition à traiter d'un volume de 1000 L, une pompe de circulation assurant un débit de composition à traiter dans un dispositif d'assainissement avec un débit de 6 m³/heure. Le dispositif d'assainissement comprend une enceinte de photolyse unique comprenant une entrée d'eau en provenance de la cuve de composition à traiter et une sortie d'eau assainie dirigée vers la cuve de composition à traiter. La composition à traiter comprend du boscalide à une concentration initiale de 25 µg/L et une concentration initiale de peroxyde d'hydrogène de 2 mg/L.

L'enceinte de photolyse est formée d'une enveloppe tubulaire rigide dont la paroi externe est opaque à la lumière et formant un espace intérieur adapté pour accueillir cinq tubes fluorescents d'axe longitudinal s'étendant parallèlement à l'axe longitudinal de l'enveloppe tubulaire rigide. Le volume interne du réacteur de décontamination est de l'ordre de 32 L. Les cinq tubes fluorescents sont des tubes de 200 W émettant à une longueur d'onde de 254 nm et disposés longitudinalement dans l'enveloppe tubulaire selon les cinq sommets d'un pentagone régulier et au contact de l'eau à traiter circulant dans l'enceinte de photolyse.

Après 10 minutes de fonctionnement du pilote semi-industriel, la quasi-totalité de la composition à traiter a été illuminée dans l'enceinte de photolyse. Le taux de dégradation du boscalide est de 58% du boscalide de départ après 10 minutes de fonctionnement du pilote semi-industriel.

Un convoyeur hydraulique d'une installation de tri et d'emballage de pommes contenant un volume de 90 m³ d'eau à titre de composition de convoyage de pommes Ariane, Rosy Glow et Pink Lady comprend un dispositif d'assainissement selon l'invention formé de six enceintes de photolyse montées en série, chaque enceinte comprenant cinq tubes fluorescents d'une puissance individuelle de 200W. Le débit de la composition de convoyage de pommes dans le dispositif d'assainissement est de 36 m³/h. Il a été observé que la pluralité d'enceintes de photolyse montées en série permet d'atteindre un taux de dégradation de 96% du boscalide de départ avec un débit de composition à traiter de 36 m³/heure et pour un temps de séjour moyen de la composition de convoyage dans le dispositif d'assainissement de l'ordre de 19 secondes.

Il va de soi que l'invention peut faire l'objet de nombreuses variantes de réalisation et applications. En particulier, un convoyeur hydraulique, un dispositif d'assainissement et un procédé d'assainissement selon l'invention sont sujets à des infinités de variantes tant dans la mise en oeuvre d'un tel convoyeur hydraulique que dans ses application à des fruits et/ou légumes flottants.

## Revendications

1. Convoyeur hydraulique d'objets flottants choisis dans le groupe formé des fruits et des légumes, du type à recirculation d'une composition, dite composition de convoyage, liquide de convoyage des objets flottants, ledit convoyeur hydraulique étant équipé d'au moins un dispositif (13) d'assainissement de ladite composition de convoyage ;
**caractérisé en ce qu'**au moins un dispositif (13) d'assainissement comprend :
- au moins un dispositif d'irradiation disposé pour pouvoir irradier une composition, dite composition à assainir, formée par mélange d'au moins une partie de ladite composition de convoyage et d'une quantité d'une composition, dite composition photo-réactive, comprenant au moins un composé photosensible choisi pour pouvoir former, sous l'effet d'une irradiation par au moins un dispositif d'irradiation, au moins un composé, dit composé actif, apte à pouvoir transformer par réaction chimique au moins un composé polluant de ladite composition de convoyage en composé non polluant, et;
- au moins deux enceintes (1) de photolyse montées en séries de sorte que ladite composition à assainir puisse s'écouler successivement dans lesdites au moins deux enceintes (1) de photolyse, au moins un dispositif d'irradiation étant disposé dans un volume intérieur de chaque enceinte de photolyse.

2. Convoyeur selon la revendication 1, **caractérisé en ce qu'**au moins un dispositif (13) d'assainissement est adapté pour être parcouru par un débit de composition à assainir et pour permettre l'irradiation de la composition à assainir par au moins un dispositif d'irradiation entre une entrée d'un débit de composition à assainir prélevé dans un canal hydraulique du convoyeur et une sortie d'un débit de composition, dite composition assainie, dirigé vers un canal hydraulique du convoyeur.

3. Convoyeur selon l'une des revendications 1 ou 2, **caractérisé en ce qu'**il comprend au moins une pompe (14) de circulation de composition à assainir formée à partir de la composition de convoyage dans le dispositif (13) d'assainissement.

4. Convoyeur selon l'une des revendications 1 à 3, **caractérisé en ce qu'**il comprend un dispositif de mélange de composition de convoyage et de composition photo-réactive en amont du dispositif d'assainissement.

5. Convoyeur selon l'une des revendications 1 à 4, **caractérisé en ce qu'**il comprend une pompe (19) de distribution de composition photo-réactive dans ladite composition de convoyage.

6. Convoyeur selon l'une des revendications 1 à 5, **caractérisé en ce qu'**au moins une -notamment chaque- enceinte (1) de photolyse est de forme cylindrique de révolution et renferme une pluralité de sources (5) lumineuses sous forme de tubes, chaque source (5) lumineuse s'étendant parallèlement à l'axe longitudinal de ladite enceinte (1) de photolyse et en regard les unes des autres, la pluralité de sources (5) lumineuses étant réparties dans ladite enceinte (1) de photolyse de façon à occuper, selon toute coupe transversale de ladite enceinte (1) de photolyse, les sommets d'un polygone régulier.

7. Convoyeur selon la revendication 6, **caractérisé en ce que** les sources (5) lumineuses de la pluralité de sources lumineuses sont uniformément réparties dans le volume intérieur de ladite enceinte (1) de photolyse.

8. Convoyeur selon l'une des revendications 6 ou 7, **caractérisé en ce que** le dispositif (13) d'assainissement comprend une entrée de composition photo-réactive située en amont d'une première enceinte de la pluralité d'enceintes (1) de photolyse.

9. Installation de tri d'objets flottants tels que des fruits ou des légumes comprenant au moins un convoyeur hydraulique selon l'une des revendications 1 à 8.

10. Procédé d'assainissement d'une composition, dite composition de convoyage, liquide de convoyage d'objets flottants choisis dans le groupe formé des fruits et des légumes, d'un convoyeur hydraulique du type à recirculation de ladite composition de convoyage, **caractérisé en ce que** :
- on mélange au moins une partie de ladite composition de convoyage avec une quantité de composition, dite composition photo-réactive, comprenant au moins un composé photosensible choisi pour pouvoir former, sous l'effet d'une irradiation par au moins un dispositif d'irradiation, au moins un composé, dit composé actif, apte à pouvoir transformer par réaction chimique au moins un composé polluant de ladite composition de convoyage en composé non polluant, et ;
- on soumet ce mélange, dit composition à assainir, à cette irradiation de façon à former une composition au moins partiellement assainie ; **caractérisé en ce qu'**on soumet ladite composition à assainir à cette irradiation dans un dispositif (13) d'assainissement parcouru par un débit de ladite composition à assainir, le dispositif (13) d'assainissement comprenant au moins deux enceintes (1) de photolyse montées en séries de sorte que ladite composition à assainir s'écoule successivement dans lesdites au moins deux enceintes (1) de photolyse, au moins un dispositif d'irradiation étant disposé dans un volume intérieur de chaque enceinte (1) de photolyse.

11. Procédé selon la revendication 10, **caractérisé en ce qu'**au moins un composé photosensible est du peroxyde d'hydrogène.

12. Procédé selon l'une quelconque des revendications 10 ou 11, **caractérisé en ce que** l'irradiation est une illumination par un rayonnement lumineux ultraviolet.

13. Procédé selon l'une des revendications 10 à 12, **caractérisé en ce qu'**on adapte la quantité de ladite composition photo-réactive et des conditions d'irradiation de façon que ladite composition de convoyage assainie présente un taux de composé photosensible résiduel qui soit inférieur à un taux maximum réglementaire prédéterminé.

14. Procédé selon l'une des revendications 10 à 13, **caractérisé en ce qu'**au moins un polluant présent dans ladite composition de convoyage est un pesticide du groupe formé des fongicides, des bactéricides et des insecticides.

## Patentansprüche

1. Hydraulikförderer für schwimmende Objekte, ausgewählt aus der Gruppe, die von den Früchten und den Gemüsen gebildet wird, vom Typ mit Umwälzung einer als Förderzusammensetzung bezeichneten flüssigen Zusammensetzung zum Fördern der schwimmenden Objekte, wobei der Hydraulikförderer mit mindestens einer Vorrichtung (13) zum Aufbereiten der Förderzusammensetzung ausgerüstet ist;
**dadurch gekennzeichnet, dass** mindestens eine Aufbereitungsvorrichtung (13) umfasst:
- mindestens eine Bestrahlungsvorrichtung, die so angeordnet ist, dass sie eine als aufzubereitende Zusammensetzung bezeichnete Zusammensetzung bestrahlen kann, welche durch Mischen von mindestens einem Teil der Förderzusammensetzung und einer Menge einer als photoreaktive Zusammensetzung bezeichneten Zusammensetzung gebildet wird, die mindestens eine photoempfindliche Verbindung umfasst, welche so ausgewählt ist, dass sie unter der Wirkung einer Bestrahlung durch mindestens eine Bestrahlungsvorrichtung mindestens eine als aktive Verbindung bezeichnete Verbindung bilden kann, welche mindestens eine verunreinigende Verbindung der Förderzusammensetzung durch chemische Reaktion in eine nicht verunreinigende Verbindung umwandeln kann; und
- mindestens zwei Photolysebehälter (1), die derart in Reihe montiert sind, dass die aufzubereitende Zusammensetzung nacheinander in die mindestens zwei Photolysebehälter (1) fließen kann, wobei in einem Innenvolumen jedes Photolysebehälters mindestens eine Bestrahlungsvorrichtung angeordnet ist.

2. Förderer nach Anspruch 1, **dadurch gekennzeichnet, dass** mindestens eine Aufbereitungsvorrichtung (13) dafür geeignet ist, von einem Durchsatz an aufzubereitender Zusammensetzung durchflossen zu werden, und dafür, das Bestrahlen der aufzubereitenden Zusammensetzung durch mindestens eine Bestrahlungsvorrichtung zwischen einem Einlass eines Durchsatzes an aufzubereitender Zusammensetzung, der aus einem Hydraulikkanal des Förderers entnommen wird, und einem Auslass eines Durchsatzes an als aufbereitete Zusammensetzung bezeichneter Zusammensetzung, die zu einem Hydraulikkanal des Förderers geleitet wird, zu ermöglichen.

3. Förderer nach einem der Ansprüche 1 oder 2, **dadurch gekennzeichnet, dass** er mindestens eine Umwälzpumpe (14) für aufzubereitende Zusammensetzung umfasst, die auf Grundlage der Förderzusammensetzung in der Aufbereitungsvorrichtung (13) gebildet wird.

4. Förderer nach einem der Ansprüche 1 bis 3, **dadurch gekennzeichnet, dass** er stromaufwärts der Aufbereitungsvorrichtung eine Vorrichtung zum Mischen von Förderzusammensetzung und von photoreaktiver Zusammensetzung umfasst.

5. Förderer nach einem der Ansprüche 1 bis 4, **dadurch gekennzeichnet, dass** er eine Pumpe (19) zum Verteilen von photoreaktiver Zusammensetzung in der Förderzusammensetzung umfasst.

6. Förderer nach einem der Ansprüche 1 bis 5, **dadurch gekennzeichnet, dass** mindestens ein - vor allem jeder - Photolysebehälter (1) von rotationszylindrischer Form ist und eine Vielzahl von Lichtquellen (5) in Form von Röhren umschließt, wobei sich jede Lichtquelle (5) parallel zur Längsachse des Photolysebehälters (1) erstreckt und dieselben einander zugewandt sind, wobei die Vielzahl von Lichtquellen (5) so im Photolysebehälter (1) verteilt sind, dass sie in jedem Querschnitt des Photolysebehälters (1) die Ecken eines regelmäßigen Polygons einnehmen.

7. Förderer nach Anspruch 6, **dadurch gekennzeichnet, dass** die Lichtquellen (5) aus der Vielzahl von Lichtquellen gleichmäßig im Innenvolumen des Photolysebehälters (1) verteilt sind.

8. Förderer nach einem der Ansprüche 6 oder 7, **dadurch gekennzeichnet, dass** die Aufbereitungsvorrichtung (13) einen Einlass für photoreaktive Zusammensetzung umfasst, der stromaufwärts eines ersten Behälters aus der Vielzahl von Photolysebehältern (1) liegt.

9. Anlage zum Sortieren von schwimmenden Objekten wie etwa Früchten oder Gemüsen, die mindestens einen Hydraulikförderer nach einem der Ansprüche 1 bis 8 umfasst.

10. Verfahren zum Aufbereiten einer als Förderzusammensetzung bezeichneten flüssigen Zusammensetzung zum Fördern von schwimmenden Objekten, ausgewählt aus der Gruppe, die von den Früchten und den Gemüsen gebildet wird, eines Hydraulikförderers vom Typ mit Umwälzung der Förderzusammensetzung, **dadurch gekennzeichnet, dass**:
- mindestens ein Teil der Förderzusammensetzung mit einer Menge einer als photoreaktive Zusammensetzung bezeichneten Zusammensetzung gemischt wird, die mindestens eine photoempfindliche Verbindung umfasst, welche so ausgewählt ist, dass sie unter der Wirkung einer Bestrahlung durch mindestens eine Bestrahlungsvorrichtung mindestens eine als aktive Verbindung bezeichnete Verbindung bilden kann, welche mindestens eine verunreinigende Verbindung der Förderzusammensetzung durch chemische Reaktion in eine nicht verunreinigende Verbindung umwandeln kann; und
- diese als aufzubereitende Zusammensetzung bezeichnete Mischung so dieser Bestrahlung ausgesetzt wird, dass eine mindestens teilweise aufbereitete Zusammensetzung gebildet wird;
**dadurch gekennzeichnet, dass** die aufzubereitende Zusammensetzung dieser Bestrahlung in einer Aufbereitungsvorrichtung (13) ausgesetzt wird, die von einem Durchsatz der aufzubereitenden Zusammensetzung durchflossen wird, wobei die Aufbereitungsvorrichtung (13) mindestens zwei Photolysebehälter (1) umfasst, die derart in Reihe montiert sind, dass die aufzubereitende Zusammensetzung nacheinander in die mindestens zwei Photolysebehälter (1) fließt, wobei in einem Innenvolumen jedes Photolysebehälters (1) mindestens eine Bestrahlungsvorrichtung angeordnet ist.

11. Verfahren nach Anspruch 10, **dadurch gekennzeichnet, dass** mindestens eine photoempfindliche Verbindung Wasserstoffperoxid ist.

12. Verfahren nach einem der Ansprüche 10 oder 11, **dadurch gekennzeichnet, dass** die Bestrahlung eine Belichtung mit einer ultravioletten Lichtstrahlung ist.

13. Verfahren nach einem der Ansprüche 10 bis 12, **dadurch gekennzeichnet, dass** die Menge der photoreaktiven Zusammensetzung und Bestrahlungsbedingungen so angepasst werden, dass die aufbereitete Förderzusammensetzung einen Restgehalt an photoempfindlicher Verbindung aufweist, der kleiner ist als ein vorbestimmter gesetzlicher Maximalgehalt.

14. Verfahren nach einem der Ansprüche 10 bis 13, **dadurch gekennzeichnet, dass** mindestens eine Verunreinigung, die in der Förderzusammensetzung vorliegt, ein Pestizid aus der Gruppe ist, die von den Fungiziden, den Bakteriziden und den Insektiziden gebildet wird.

## Claims

1. Hydraulic conveyor of floating objects selected from the group formed of fruits and vegetables, of the type having recirculation of a composition, referred to as conveying composition, liquid for conveying the floating objects, said hydraulic conveyor being equipped with at least one device (13) for sanitising said conveying composition;
**characterised in that** at least one sanitising device (13) comprises:
- at least one irradiation device positioned in order to be able to irradiate a composition, referred to as composition to be sanitised, formed by mixing at least one portion of said conveying composition and an amount of a composition, referred to as a photoreactive composition, comprising at least one photosensitive compound selected in order to be able to form, under the effect of an irradiation by at least one irradiation device, at least one compound, referred to as active compound, suitable for making it possible to convert, by chemical reaction, at least one pollutant compound of said conveying composition into a non-pollutant compound, and;
- at least two photolysis chambers (1) mounted in series so that said composition to be sanitised can flow successively through said at least two photolysis chambers (1), at least one irradiation device being positioned in an internal volume of each photolysis chamber.

2. Conveyor according to claim 1, **characterised in that** at least one sanitising device (13) is suitable for being passed through by a flow rate of composition to be sanitised and for making it possible to irradiate the composition to be sanitised by at least one irradiation device between an inlet of a flow rate of composition to be sanitised taken from a hydraulic channel of the conveyor and an outlet of a flow rate of composition, referred to as sanitised composition, directed towards a hydraulic channel of the conveyor.

3. Conveyor according to one of claims 1 or 2, **characterised in that** it comprises at least one pump (14) for circulating the composition to be sanitised formed from the conveying composition in the sanitising device (13).

4. Conveyor according to one of claims 1 to 3, **characterised in that** it comprises a device for mixing the conveying composition and photoreactive composition upstream of the sanitising device.

5. Conveyor according to one of claims 1 to 4, **characterised in that** it comprises a pump (19) for distributing photoreactive composition in said conveying composition.

6. Conveyor according to one of claims 1 to 5, **characterised in that** at least one -in particular each-photolysis chamber (1) has a cylindrical shape of revolution and encloses a plurality of sources (5) of light in the form of tubes, with each source (5) of light extending parallel to the longitudinal axis of said photolysis chamber (1) and facing one another, with the plurality of sources (5) of light being distributed in said photolysis chamber (1) in such a way as to occupy, according to any cross-section of said photolysis chamber (1), the vertices of a regular polygon.

7. Conveyor according to claim 6, **characterised in that** the sources (5) of light of the plurality of sources of light are evenly distributed in the internal volume of said photolysis chamber (1).

8. Conveyor according to one of claims 6 or 7, **characterised in that** the sanitising device (13) comprises an inlet of photoreactive composition located upstream of a first chamber of the plurality of photolysis chambers (1).

9. Installation for sorting floating objects such as fruits or vegetables comprising at least one hydraulic conveyor according to one of claims 1 to 8.

10. Method for sanitising a composition, referred to as conveying composition, liquid for conveying the floating objects selected from the group formed of fruits and vegetables, of a hydraulic conveyor of the type having recirculation of said conveying composition, **characterised in that**:
- at least one portion of said conveying composition is mixed with an amount of a composition, referred to as photoreactive composition,
comprising at least one photosensitive compound selected in order to be able to form, under the effect of an irradiation by at least one irradiation device, at least one compound, referred to as active compound, suitable for making it possible to convert, by chemical reaction, at least one pollutant compound of said conveying composition into a non-pollutant compound, and;
- this mixture, referred to as composition to be sanitised, is subjected to this irradiation in such a way as to form a composition that is at least partially sanitised; **characterised in that** said composition to be sanitised is subjected to this radiation in a sanitising device (13) passed through by a flow rate of said composition to be sanitised, with the sanitising device (13) comprising at least two photolysis chambers (1) mounted in series so that said composition to be sanitised can flow successively through said at least two photolysis chambers (1), at least one irradiation device being positioned in an internal volume of each photolysis chamber (1).

11. Method according to claim 10, **characterised in that** at least one photosensitive compound is hydrogen peroxide.

12. Method according to any of claims 10 or 11, **characterised in that** the radiation is an illumination by ultraviolet light radiation.

13. Method according to one of claims 10 to 12, **characterised in that** the quantity of said photoreactive composition and irradiation conditions are adapted in such a way that said sanitised conveying composition has a residual content of photosensitive compound that is less than a maximum predetermined regulatory content.

14. Method according to one of claims 10 to 13, **characterised in that** at least one pollutant present in said conveying composition is a pesticide from the group formed of fungicides, bactericides and insecticides.
